# EUROPEAN PATENT APPLICATION

(11) **EP 4 775 939 A1**
(43) Date of publication of application: **15.07.2026**
(21) Application number: 25227343.8
(22) Date of filing: 29.12.2025
(51) Int. Cl.: G01J 3/02, G02B 7/182, G01N 21/3504, G02B 7/198, G01J 3/42, G01N 21/39

(54) **MIRROR POSITIONING SYSTEM FOR A RESONANT SPECTROSCOPY CAVITY**

(30) Priority: 13.01.2025 IN 202511003017; 15.12.2025 US 202519420277
(71) Applicant: Honeywell International Inc., Charlotte, NC 28202 (US)
(72) Inventor: TRIPATHY, Janmejaya, Charlotte, 28202 (US); B, Gangaraju, Charlotte, 28202 (US); FENG, Chen, Charlotte, 28202 (US); HOYT, Chad, Charlotte, 28202 (US)
(74) Representative: Haseltine Lake Kempner LLP

(57) **Abstract**

The present disclosure provides a system for mirror positioning comprising a mirror fixture secured to a first end of a body defining a longitudinal resonant spectroscopy cavity. The mirror fixture defines an opening to receive a first mirror, a through-hole, and has at least three clamps to selectively secure the first mirror after positioning. The system includes a mirror holder with an opening to temporarily receive the first mirror for positioning relative to the mirror fixture and body, and defining a through-hole. A translation stage moves the mirror holder and first mirror through multiple positions relative to the mirror fixture and body as laser light projects through the mirror holder through-hole, through the first mirror, through the mirror fixture through-hole, into the resonant spectroscopy cavity, and out to be reflected by a second mirror secured to the body's second end until resonance is detected.

## Description

### CROSS-REFERENCE TO RELATED APPLICATIONS

This application claims priority to Indian Patent Application No. 202511003017, titled METHOD AND FIXTURE FOR PRECISION PLACEMENT OF MIRROR, filed January 13, 2025, which is hereby incorporated by reference in its entirety.

### FIELD OF INVENTION

The present disclosure relates to optical spectroscopy systems, and more particularly to a mirror alignment systems for optical spectroscopy systems.

### BACKGROUND

Optical spectroscopy systems are widely used for gas detection and analysis applications across various industries, including semiconductor manufacturing, pharmaceutical production, and environmental monitoring. These systems typically employ optical cavities to enhance the interaction between light and gas molecules, thereby improving detection sensitivity and measurement accuracy.

Conventional optical spectroscopy systems often utilize linear optical cavities formed by positioning two highly reflective mirrors at opposite ends of a chamber containing the gas sample. The mirrors create a resonant cavity where light bounces back and forth multiple times, effectively increasing the optical path length through the gas sample. This extended interaction enhances the absorption signals used for gas concentration measurements.

The performance of such optical cavities depends heavily on the precise alignment and positioning of the mirrors. The spacing between mirrors must be controlled with sub-micrometer accuracy to achieve the desired free spectral range and maintain optimal resonance conditions.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Various embodiments described herein relate to systems and methods system for mirror positioning.

According to an aspect of the present disclosure, a system for mirror positioning is provided. The system comprises a mirror fixture adapted to be secured to a first end of a body defining a longitudinal resonant spectroscopy cavity. The mirror fixture defines an opening adapted to receive a first mirror. The mirror fixture defines a through-hole. The mirror fixture has at least three clamps spaced to selectively secure the first mirror in the opening after the first mirror has been positioned. The system comprises a mirror holder defining an opening adapted to temporarily receive the first mirror for positioning the first mirror relative to the mirror fixture and to the body. The mirror holder defines a through-hole. The system comprises a translation stage to move the mirror holder and the first mirror through a plurality of positions relative to the mirror fixture and to the body as laser light is projected through the through-hole of the mirror holder, through the first mirror, through the through-hole of the mirror fixture, into the resonant spectroscopy cavity, and out of the resonant spectroscopy cavity to be reflected by a second mirror secured to a second end of the body until resonance of the laser light is detected.

According to other aspects of the present disclosure, the system may include one or more of the following features. Each of the at least three clamps may comprise an arcuate shoe movable along a respective radial axis of the mirror fixture. The translation stage may comprise a five axis translation stage capable of moving the mirror holder along an X axis, a Y axis, a Z axis, a pitch axis, and a yaw axis. A portion of the mirror fixture defining the opening may further define at least three evenly spaced gaps, and a portion of the mirror holder defining the opening may comprise at least three evenly spaced arms, each of the spaced arms positioned to engage a corresponding gap of the mirror fixture during mirror positioning. Each of the evenly spaced arms may define a threaded hole along a respective radial axis of the mirror holder for receiving a respective one of at least three set screws, and the at least three set screws may be selectively moveable inward to secure the first mirror and selectively moveable outward to release the first mirror. The system may further comprise two or more translation rods along which the translation stage moves relative to the body. The two or more translation rods may be removably affixed to the body.

According to another aspect of the present disclosure, a system for mirror positioning is provided. The system comprises a body defining a longitudinal resonant spectroscopy cavity. The system comprises a mirror fixture securable to a first end of the body. The mirror fixture defines an opening adapted to receive a first mirror. The mirror fixture defines a through-hole. The mirror fixture has at least three clamps spaced to selectively secure the first mirror in the opening. The system comprises a mirror holder defining an opening adapted to temporarily receive the first mirror for positioning the first mirror relative to the mirror fixture and to the body. The mirror holder defines a through-hole. The system comprises a translation stage to move the mirror holder and the first mirror through a plurality of positions relative to the mirror fixture and to the body as laser light is projected through the through-hole of the mirror holder, through the first mirror, through the through-hole of the mirror fixture, into the resonant spectroscopy cavity, and out of the resonant spectroscopy cavity to be reflected by a second mirror secured to a second end of the body until resonance of the laser light is detected.

According to other aspects of the present disclosure, the system may include one or more of the following features. Each of the at least three clamps may comprise an arcuate shoe movable along a respective radial axis of the mirror fixture. The translation stage may comprise a five axis translation stage capable of moving the mirror holder along an X axis, a Y axis, a Z axis, a pitch axis, and a yaw axis. A portion of the mirror fixture defining the opening may further define at least three evenly spaced gaps, and a portion of the mirror holder defining the opening may comprise at least three evenly spaced arms, each of the spaced arms positioned to engage a corresponding gap of the mirror fixture during mirror positioning. Each of the evenly spaced arms may define a threaded hole along a respective radial axis of the mirror holder for receiving a respective one of at least three set screws, and the at least three set screws may be selectively moveable inward to secure the first mirror and selectively moveable outward to release the first mirror. The system may further comprise two or more translation rods along which the translation stage moves relative to the body. The two or more translation rods may be removably affixed to the body.

According to another aspect of the present disclosure, a method of mirror positioning is provided. The method comprises securing a mirror fixture to a first end of a body defining a longitudinal resonant spectroscopy cavity. The mirror fixture defines an opening adapted to receive a first mirror. The mirror fixture defines a through-hole. The mirror fixture has at least three clamps spaced to selectively secure the first mirror in the opening. The method comprises temporarily securing the first mirror to a mirror holder defining an opening adapted to temporarily receive the first mirror for positioning the first mirror relative to the mirror fixture and to the body. The mirror holder defines a through-hole. The method comprises attaching the mirror holder to a translation stage. The method comprises moving, via the translation stage, the mirror holder and the first mirror through a plurality of positions relative to the mirror fixture and to the body as laser light is projected through the through-hole of the mirror holder, through the first mirror, through the through-hole of the mirror fixture, into the resonant spectroscopy cavity, and out of the resonant spectroscopy cavity to be reflected by a second mirror secured to a second end of the body until resonance of the laser light is detected.

According to other aspects of the present disclosure, the method may include one or more of the following features. Each of the at least three clamps may comprise an arcuate shoe movable along a respective radial axis of the mirror fixture. The translation stage may comprise a five axis translation stage capable of moving the mirror holder along an X axis, a Y axis, a Z axis, a pitch axis, and a yaw axis. A portion of the mirror fixture defining the opening may further define at least three evenly spaced gaps, and a portion of the mirror holder defining the opening may comprise at least three evenly spaced arms, each of the spaced arms positioned to engage a corresponding gap of the mirror fixture during mirror positioning. Each of the evenly spaced arms may define a threaded hole along a respective radial axis of the mirror holder for receiving a respective one of at least three set screws, and the at least three set screws may selectively move inward to secure the first mirror and outward to release the first mirror. The method may further comprise two or more translation rods along which the translation stage moves relative to the body, and the two or more translation rods may be removably affixed to the body.

The foregoing general description of the illustrative embodiments and the following detailed description thereof are merely exemplary aspects of the teachings of this disclosure and are not restrictive.

### BRIEF DESCRIPTION OF FIGURES

The description of the illustrative embodiments is read in conjunction with the accompanying figures. It will be appreciated that, for simplicity and clarity of illustration, elements illustrated in the figures have not necessarily been drawn to scale, unless described otherwise. For example, the dimensions of some of the elements is exaggerated relative to other elements, unless described otherwise. Embodiments incorporating teachings of the present disclosure are shown and described with respect to the following figures presented herein.
FIG. 1 illustrates a side view of a spectroscopy gas cell, according to aspects of the present disclosure.
FIG. 2 illustrates an exploded perspective view of a first mirror fixture, according to aspects of the present disclosure.
FIG. 3 illustrates an exploded perspective view of a first mirror holder, according to aspects of the present disclosure.
FIG. 4 illustrates a perspective view of the first mirror holder and a first mirror, according to aspects of the present disclosure.
FIG. 5 illustrates a side view of a mirror alignment system integrated with a cylindrical body, according to aspects of the present disclosure.
FIG. 6 illustrates a cross-sectional view of the mirror alignment system of FIG. 5, according to aspects of the present disclosure.
FIG. 7 illustrates a perspective view of a mirror mounting assembly, removed from the mirror alignment system for visibility, according to aspects of the present disclosure.
FIG. 8 illustrates a block diagram of a control device for use with spectroscopy gas cell systems, according to aspects of the present disclosure.

### DETAILED DESCRIPTION

Some embodiments of the present disclosure will now be described more fully hereinafter with reference to the accompanying drawings, in which some, but not all embodiments of the disclosure are shown. Indeed, these disclosures are embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase is included in at least one embodiment of the present disclosure and is included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase is included in at least one example of the present disclosure and is included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature is optionally included in some examples, or it is excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information is transmitted to and/or received from these elements or components.

The term "component" may refer to an article, a device, or an apparatus that may comprise one or more surfaces, portions, layers and/or elements. For example, an example component may comprise one or more substrates that provide underlying layer(s) for the component and may comprise one or more elements that may form part of and/or are disposed on top of the substrate. In the present disclosure, the term "element" may refer to an article, a device, or an apparatus that may provide one or more functionalities.

Resonant spectroscopy cavities may provide enhanced sensitivity for gas detection applications by creating extended optical path lengths within compact physical dimensions. Such cavities may utilize high finesse mirrors positioned at precise distances to establish resonant conditions for laser light. The sensitivity of gas detection may be directly proportional to the effective optical path length achieved within the cavity, making precise mirror positioning a factor in system performance.

Achieving the required positioning accuracy for resonant spectroscopy applications may present challenges due to the stringent tolerance requirements. In some cases, the free spectral range of a cavity may be 2 GHz, which may require inter-mirror distance accuracy at the angstrom level. Conventional mechanical manufacturing techniques may not achieve tolerances in the range of sub-micrometers, leading to multiple iterations of compensating spacer manufacturing and testing. Such iterative processes may increase both the time and cost associated with cavity assembly and alignment.

Mirror positioning systems may address these challenges by providing precise alignment capabilities during assembly while eliminating the need for multiple manufacturing iterations. Such systems may enable the achievement of nanometer-level positioning accuracy through controlled adjustment mechanisms that allow real-time optimization of mirror placement based on optical feedback from the resonant cavity.

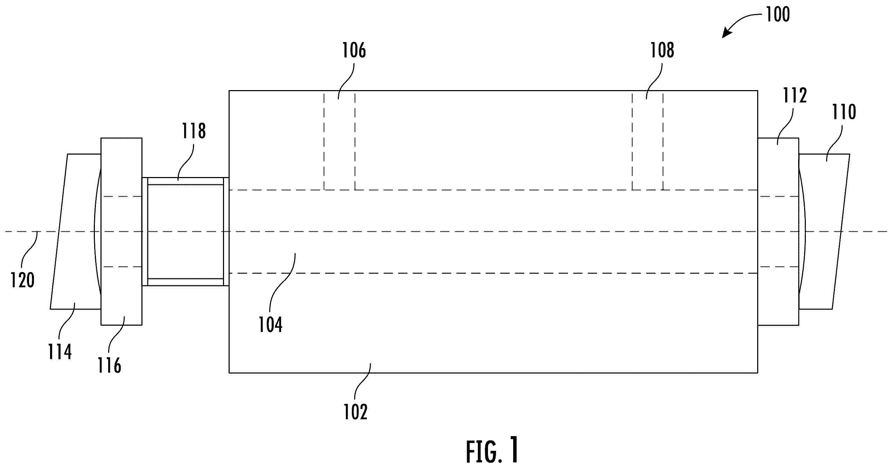

Referring to FIG. 1, a spectroscopy gas cell 100 may comprise a cylindrical body 102 that defines a longitudinal resonant spectroscopy cavity 104 extending along an optical axis 120. The cylindrical body 102 may include an inlet 106 and an outlet 108 that provide access to the resonant cavity 104 for introduction and removal of gas samples during spectroscopic analysis operations. In some cases, the cylindrical body 102 may include tapped threaded holes for compatibility with cage mounting rods, which may facilitate integration with optical bench systems and alignment equipment.

The cavity body in such spectroscopy gas cells may be constructed from ultra-low expansion materials to minimize thermal effects on mirror positioning. In some cases, materials such as Zerodur or Invar may be used for the cylindrical body construction. The selection of such materials may contribute to the overall stability and performance of the resonant cavity system.

A first mirror 110 may be positioned at one end of the cylindrical body 102 (the right side in FIG. 1) and secured to the cylindrical body 102 by a first mirror fixture 112. The first mirror fixture 112 may define an opening adapted to receive the first mirror 110. The first mirror fixture 112 may also define a through-hole that allows optical transmission along the optical axis 120.

A second mirror 114 may be positioned at the opposite end of the cylindrical body 102 and secured by a second mirror fixture 116. The second mirror fixture 116 may maintain the second mirror 114 in alignment with the optical axis 120 and may be securable to a second end of the cylindrical body 102. As illustrated, a piezoelectric positioner 118 may be disposed between the first mirror 110 and the cylindrical body 102, enabling precise adjustment of the second mirror 114 position along the optical axis 120.

The first mirror 110 and the second mirror 114 may be arranged to form a resonant optical cavity within the resonant cavity 104, with the optical axis 120 extending between the mirrors. In some cases, the first mirror 110 and the second mirror 114 may be high finesse mirrors with reflectivity greater than 0.9999 and finesse of 30,000 or above. The first mirror 110 and the second mirror 114 may have wedged surfaces with front and back surfaces that are not parallel, having an angle of 30 arc minutes. The first mirror 110 and the second mirror 114 may have a radius of curvature of 1000mm and may be concave towards each other to establish stable resonant conditions within the cavity.

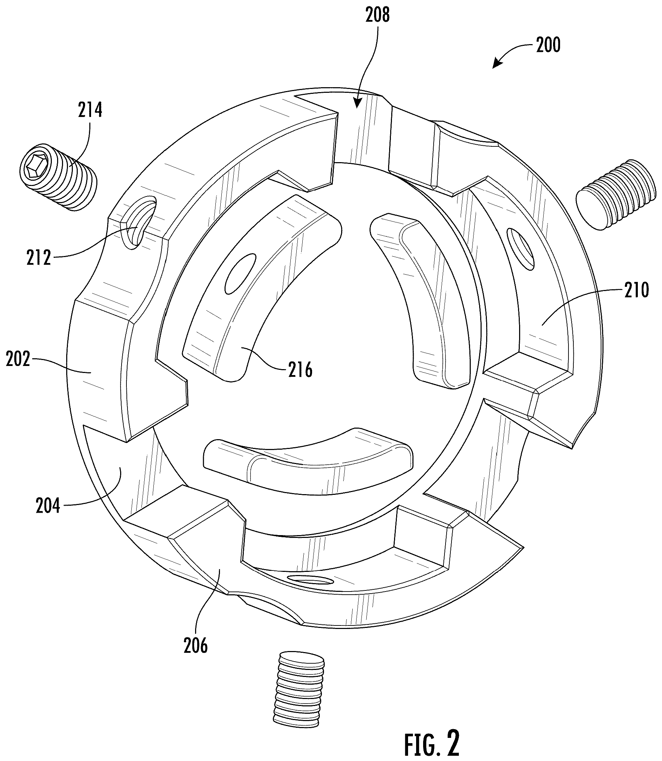

Referring to FIG. 2, a first mirror fixture 200 comprises a main body 202 that includes a circular base 204 and walls 206 extending outward from the circular base 204. The walls 206 may be arranged to form a generally cylindrical structure with gaps 208 positioned at intervals around the circumference. In some cases, the gaps 208 enable the first mirror fixture 200 to closely engage with the first mirror holder 300 (described below) during positioning of the first mirror.

Each of the walls 206 defines a corresponding recess 210 to receive a corresponding arcuate shoe 216. The arcuate shoe 216 may be positioned within the gaps 208 and may have a curved profile that corresponds to the circular geometry of the first mirror fixture 200. Threaded holes 212 may be provided in the walls 206 to receive adjustment screws 214. The adjustment screws 214 may extend through the threaded holes 212 and may be configured to each engage with a corresponding arcuate shoe 216. In some cases, the arcuate shoe 216 may be movable along a respective radial axis of the first mirror fixture 200, allowing for precise positioning and clamping of the first mirror.

The arcuate shoe 216 may distribute stress across a mirror edge to avoid point stress concentration. Such stress distribution may prevent damage to delicate optical surfaces while providing secure mounting of the first mirror. The arcuate shoe 216 may be configured to apply uniform pressure around the circumference of the first mirror, maintaining stable positioning without creating localized stress points that could affect optical performance. The first mirror fixture 200 may have at least three clamps spaced to selectively secure the first mirror in an opening after the first mirror has been positioned.

The first mirror fixture 200 is typically secured to one end of the cylindrical body of a spectroscopy gas cell, using any suitable adhesive.

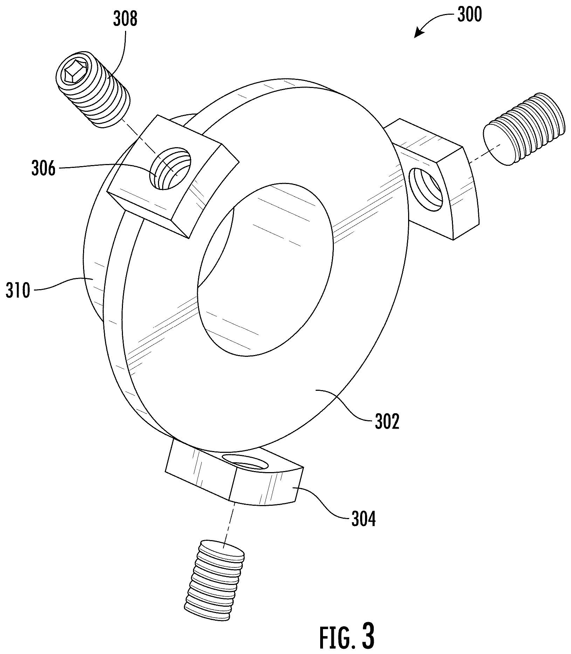

Referring to FIG. 3, a first mirror holder 300 may comprise a circular base 302 that provides structural support for the assembly. The circular base 302 may be configured to interface with positioning equipment and may provide a stable platform for mirror mounting operations. In some cases, the circular base 302 may be manufactured from materials that provide dimensional stability and may be compatible with precision alignment systems.

Extending from the circular base 302 may be three mirror mounting arms 304 that may be evenly spaced around the circumference of the circular base 302 to provide balanced support for the first mirror. In some cases, the mirror mounting arms 304 may be positioned to engage corresponding gaps 208 of the first mirror fixture 200 during mirror positioning operations.

Each mirror mounting arm 304 may include a threaded hole 306 configured to receive a set screw 308. The threaded holes 306 may be oriented along respective radial axes of the first mirror holder 300, allowing the set screws 308 to engage with mirror edges in a controlled manner. The set screws 308 may be selectively moveable inward to secure the first mirror 110 and selectively moveable outward to release the first mirror 110. In some cases, the set screws 308 may include nylon tips to prevent damage to optical surfaces during temporary mounting operations.

The first mirror holder 300 may define an opening adapted to temporarily receive the first mirror 110 for positioning the first mirror 110 relative to the first mirror fixture 200 and to the cylindrical body 102. The opening may be sized to accommodate the first mirror 110 while allowing for precise positioning adjustments during alignment procedures. The mirror mounting arms 304 may provide temporary support for the first mirror 110 without contacting the optical surfaces, maintaining the integrity of reflective coatings during handling and positioning operations.

The circular base 302 may include a central aperture or through-hole that allows optical transmission through the first mirror holder 300. The central aperture may be aligned with the optical axis 120 and may provide an unobstructed path for laser light during alignment and testing procedures. In some cases, the central aperture may be sized to accommodate the beam diameter while providing clearance for optical components and may facilitate the passage of light through the assembly during resonance detection operations. The central aperture may allow laser light to be projected through the first mirror holder 300, through the first mirror fixture 200, through the first mirror 110, and into the resonant spectroscopy cavity for alignment verification. In some cases, the through-hole may be configured to minimize optical interference while providing the necessary clearance for beam propagation during mirror positioning operations.

The first mirror holder 300 may include a rear extended portion 310 that extends outward from the first mirror fixture 200. The rear extended portion 310 may provide a mechanical interface that enables coupling between the first mirror holder 300 and the translation stage (described below). In some cases, the rear extended portion 310 may be configured to transmit positioning forces from the translation stage to the first mirror holder 300 and the first mirror.

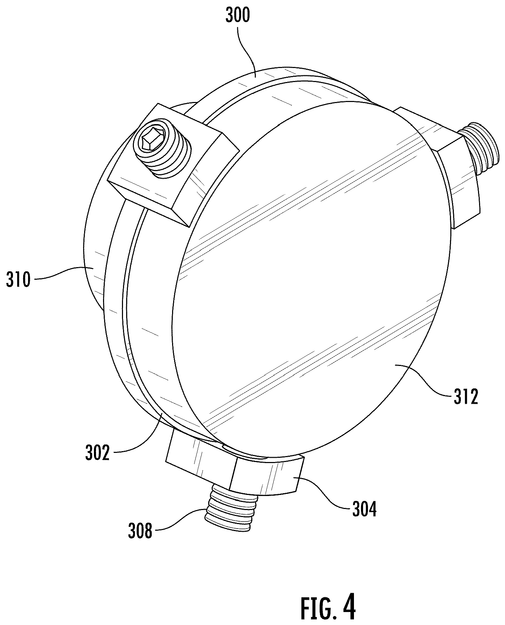

Referring to FIG. 4, the first mirror holder 300 is shown with a first mirror 312 in an assembled configuration for positioning operations. The circular base 302 may provide structural support for the mirror mounting arms 304, which may extend radially outward from the circular base 302 to engage with the first mirror 312. The mirror mounting arms 304 may be positioned to contact the edge of the first mirror 312, providing support without interfering with the optical surfaces of the first mirror 312.

The set screws 308 may be threaded through the mirror mounting arms 304 and may be configured to secure the first mirror 312 by engaging with the perimeter of the first mirror 312. In some cases, the set screws 308 may be tightened to apply controlled pressure against the edge of the first mirror 312, creating a secure temporary mounting arrangement. The set screws 308 may be positioned to distribute mounting forces evenly around the circumference of the first mirror 312, preventing localized stress concentrations that could damage the optical component.

The first mirror 312 may be positioned within the first mirror holder 300 with the reflective surface facing outward toward the optical axis 120. The first mirror 312 may be held in place by the mirror mounting arms 304 through contact with the mirror's perimeter, allowing for precise positioning while maintaining access to the mirror edge for subsequent fixture attachment operations. In some cases, the first mirror 312 may be a high finesse mirror with wedged surfaces, and the first mirror holder 300 may accommodate such geometric features without compromising the mounting stability. The temporary mounting configuration provided by the first mirror holder 300 may enable precise positioning of the first mirror 312 during alignment procedures.

The assembly configuration shown in FIG. 4 may demonstrate how the first mirror holder 300 provides a temporary mounting structure that maintains the first mirror 312 in a stable position during alignment operations. The mirror mounting arms 304 may be configured to release the first mirror 312 when the set screws 308 are loosened, allowing for transfer of the first mirror 312 to the first mirror fixture 200 once proper alignment has been achieved. Such temporary mounting capability may facilitate the precise positioning process while ensuring that the first mirror 312 remains secure during handling and adjustment operations.

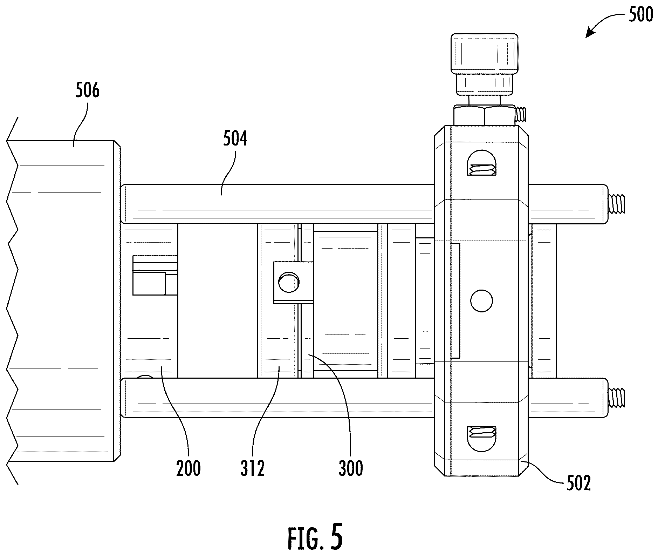

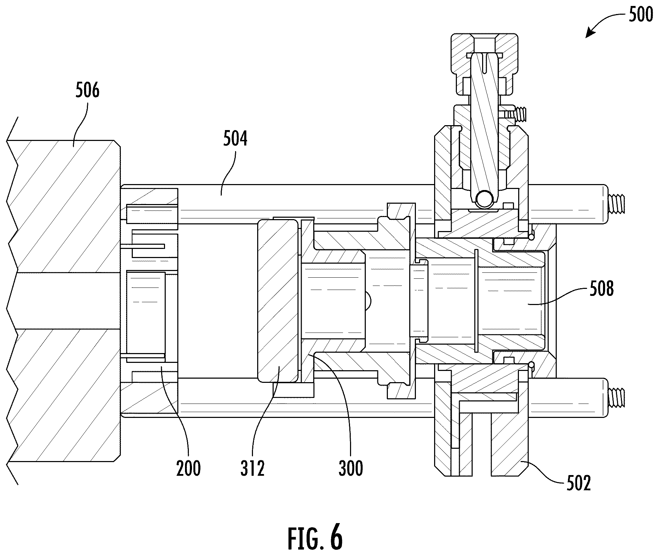

Referring to FIGS. 5 and 6, a mirror alignment system 500 may be provided for positioning a mirror within a spectroscopy gas cell. The mirror alignment system 500 may include a translation stage 502 mounted on translation rods 504, which may be attached to a cylindrical body 506 of a spectroscopy gas cell. The translation stage 502 may support the first mirror holder 300, which may hold the first mirror 312. The first mirror holder 300 may be positioned to interface with the first mirror fixture 200 that may be configured to be attached to the cylindrical body 506.

The translation rods 504 may extend parallel to the optical axis and may provide a stable mounting framework for the translation stage 502. In some cases, the translation rods 504 may be cage mounting rods that provide mechanical alignment reference for the translation stage 502 movement. The translation rods 504 may be removably affixed to the cylindrical body 506, allowing for assembly and disassembly of the mirror alignment system 500 as needed during cavity construction and maintenance operations.

The translation stage 502 may enable precise positioning of the first mirror holder 300 and the first mirror 312 along multiple axes, allowing for adjustment of the mirror's position relative to the cylindrical body 506. In some cases, the translation stage 502 may comprise a five axis translation stage capable of moving the first mirror holder 300 along an X axis, a Y axis, a Z axis, a pitch axis, and a yaw axis. The translation stage 502 may be a five-axis kinematic mount providing X, Y, Z translation and tip-tilt adjustment capabilities, enabling comprehensive positioning control during mirror alignment procedures.

The translation stage 502 may include a through-hole 508 extending along the length of the translation stage 502. The through-hole 508 may provide an optical pathway that allows laser light to propagate through the translation stage 502 during alignment and operational procedures.

The first mirror holder 300 may secure the first mirror 312 and may be moved by the translation stage 502 to achieve the desired alignment. The translation stage 502 may move the first mirror holder 300 and the first mirror 312 through a plurality of positions relative to the first mirror fixture 200 and to the cylindrical body 506 as laser light is projected through the through-hole of the first mirror holder 300, through the first mirror 312, through the through-hole of the first mirror fixture 200, into the resonant spectroscopy cavity, and out of the resonant spectroscopy cavity to be reflected by the second mirror 114 secured to a second end of the cylindrical body 506 until resonance of the laser light is detected.

The first mirror fixture 200 may be configured to be permanently attached to the cylindrical body 506 and may include features for receiving and securing the first mirror 312 once proper alignment has been achieved.

The mirror alignment system 500 may facilitate the positioning process by providing controlled movement capabilities that enable real-time optimization of mirror placement based on optical feedback from the resonant cavity. The translation stage 502 may provide fine adjustment resolution that may be compatible with the nanometer-level positioning accuracy required for resonant spectroscopy applications. In some cases, the translation stage 502 may enable positioning adjustments while monitoring the resonance conditions within the cavity, allowing for iterative optimization of the mirror position until the desired optical performance is achieved.

The first mirror holder 300 may be mechanically coupled to the translation stage 502 through the rear extended portion 310, allowing the first mirror 312 to be precisely positioned and aligned within the cylindrical body 506. The mechanical coupling may enable the translation stage 502 to control the position and orientation of the first mirror 312 through multi-axis adjustment capabilities. The rear extended portion 310 may provide a rigid connection that maintains alignment stability during adjustment operations while allowing for controlled movement of the first mirror 312.

The arrangement shown in FIGS. 5 and 6 may demonstrate the assembly configuration during the alignment process, where the translation stage 502 provides multi-axis adjustment capability to position the first mirror 312 at the desired location and orientation. The translation stage 502 may move the first mirror holder 300 and the first mirror 312 through a plurality of positions relative to the first mirror fixture 200 and to the cylindrical body 506 during alignment procedures. The translation rods 504 may maintain alignment stability during the adjustment process by providing a stable reference frame for the translation stage 502 movement.

The mechanical coupling between the first mirror holder 300 and the translation stage 502 may enable precise control of the first mirror 312 position while the first mirror fixture 200 remains fixed relative to the cylindrical body 506. Such configuration may allow for iterative adjustment of the first mirror 312 position until the desired resonance conditions are achieved within the spectroscopy gas cell. Once proper alignment has been established, the first mirror fixture 200 may secure the first mirror 312 in the aligned position, and the first mirror holder 300 and translation stage 502 may be removed from the assembly.

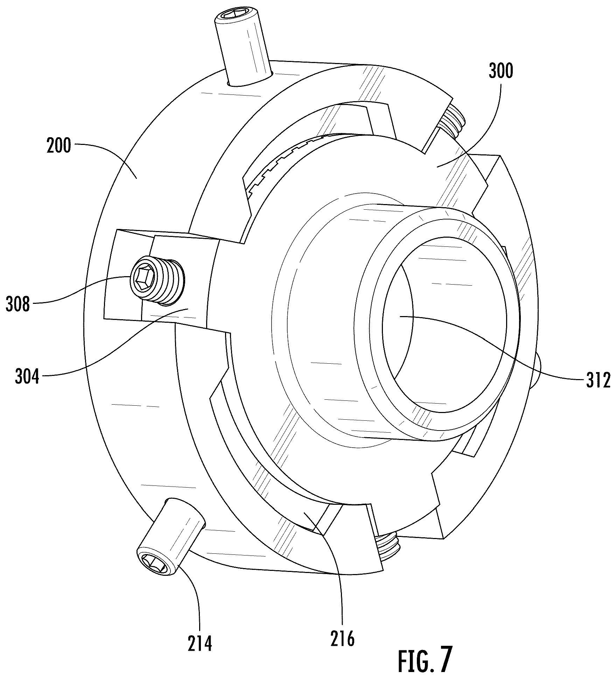

Referring to FIG. 7, a perspective view of a mirror mounting assembly, removed from the mirror alignment system for visibility, illustrates the relationship between the first mirror fixture 200, the first mirror holder 300, and the first mirror 312 during the mirror mounting assembly process. Specifically, FIG. 7 illustrates how the gaps 208 in the first mirror fixture 200 engage with the arms 304 of the first mirror holder 300 to enable close positioning of the first mirror fixture 200 and the first mirror holder 300. This close positioning enables the securement of the first mirror 312 to be transferred from the first mirror holder 300 to the first mirror fixture 200 once the first mirror 312 is precisely positioned.

During this alignment process, the piezoelectric positioner 118 is triggered with a particular frequency which changes the inter-mirror distance during the alignment of the second mirror. This distance range may be in some microns. This achieves a particular distance in nanometer accuracy for resonant condition, which is difficult to achieve with manual alignment alone. In various embodiments, the inter-mirror distance should satisfy a condition of d = nλ/2, where n is a positive integer and λ is the wavelength of the laser beam.

Once proper alignment of the first mirror 312 has been achieved through the translation stage positioning, the adjustment screws 214 may be tightened to engage the arcuate shoe 216 with the first mirror 312, creating a permanent mounting arrangement. The first mirror holder 300 may then be removed by loosening the set screws 308, leaving the first mirror 312 secured within the first mirror fixture 200.

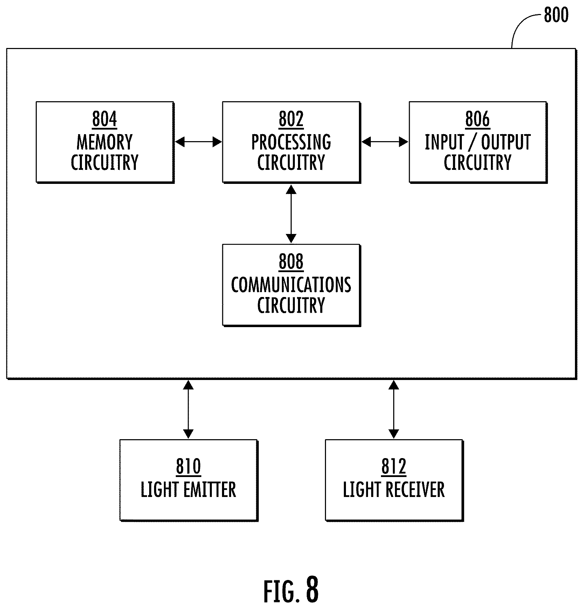

Referring to FIG. 8, a device 800 may be provided for controlling and operating the spectroscopy gas cell systems described herein. The device 800 may include several interconnected components that enable operation and control of the spectroscopy system during mirror alignment procedures and gas detection operations. The device 800 may coordinate the various functions required for precise mirror positioning and spectroscopic measurements within the resonant cavity system.

The device 800 may comprise processing circuitry 802, which may be communicatively coupled to memory circuitry 804. The processing circuitry 802 may execute instructions and perform computational operations for controlling the device 800 during alignment and measurement procedures. In some cases, the processing circuitry 802 may include microprocessors, digital signal processors, or other computational elements capable of executing control algorithms for mirror positioning and spectroscopic analysis. The processing circuitry 802 may coordinate the operation of multiple system components to achieve precise alignment and measurement capabilities.

The memory circuitry 804 may store data, instructions, and other information used by the processing circuitry 802 during operation. The memory circuitry 804 may include volatile and non-volatile memory elements that provide storage for control algorithms, calibration data, and measurement results. In some cases, the memory circuitry 804 may store positioning parameters for the translation stage 502 and alignment procedures for achieving resonance conditions within the spectroscopy gas cell 100. The memory circuitry 804 may also store spectroscopic reference data for gas identification and concentration determination.

The device 800 may further include input/output circuitry 806, which may be connected to the processing circuitry 802. The input/output circuitry 806 may facilitate data exchange between the device 800 and external systems or components during alignment and measurement operations. In some cases, the input/output circuitry 806 may provide interfaces for controlling the translation stage 502 and the piezoelectric positioner 118 during mirror positioning procedures. The input/output circuitry 806 may also provide connections for user interfaces and external control systems that may be used during cavity assembly and operation.

Communications circuitry 808 may also be connected to the processing circuitry 802 and may enable communication with other devices or systems through wired or wireless communication protocols. The communications circuitry 808 may transmit measurement results and receive control commands from external systems during spectroscopic analysis operations. In some cases, the communications circuitry 808 may provide network connectivity for remote monitoring and control of the spectroscopy system, enabling integration with larger analytical systems or data management platforms.

A light emitter 810 may be connected to the device 800 and may be configured to generate and emit light into the spectroscopy gas cell system. The light emitter 810 may provide the laser light source used for gas detection and analysis within the resonant cavity 104 of the spectroscopy gas cell 100. In some cases, the light emitter 810 may generate laser light in the wavelength range from 1460nm to 1660nm for gas detection applications. The light emitter 810 may be controlled by the processing circuitry 802 to provide stable optical output during alignment procedures and spectroscopic measurements.

A light receiver 812 may also be connected to the device 800 and may be configured to receive light transmitted through or reflected from the spectroscopy gas cell 100. The light receiver 812 may detect the optical signals that have interacted with gas samples within the resonant cavity 104 and may provide feedback for alignment optimization and spectroscopic analysis. In some cases, the light receiver 812 may include photodetectors or other optical sensing elements capable of detecting the resonance conditions within the cavity formed by the first mirror 110 and the second mirror 114.

The processing circuitry 802 may coordinate the operation of the light emitter 810 and the light receiver 812, controlling the emission of light and processing the received optical signals to determine gas concentrations and other spectroscopic measurements. During mirror alignment procedures, the processing circuitry 802 may monitor signals from the light receiver 812 to detect resonance conditions as the translation stage 502 moves the first mirror holder 300 and the first mirror 110 through a plurality of positions. The processing circuitry 802 may implement feedback control algorithms that optimize mirror positioning based on the optical signals received from the light receiver 812.

The systems and methods of various embodiments of the present disclosure may achieve positioning accuracy at the angstrom level, which may be required for resonant spectroscopy applications where the free spectral range of the cavity corresponds to specific inter-mirror distances. The systematic approach provided by the systems and methods described herein may reduce both the time and cost associated with cavity assembly while achieving the precision required for sensitive gas detection applications. The mirror positioning systems and methods described herein may provide substantial advantages over conventional cavity assembly methods by eliminating the need for multiple manufacturing iterations during resonant spectroscopy cavity construction.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A system for mirror positioning, the system comprising:
a mirror fixture adapted to be secured to a first end of a body defining a longitudinal resonant spectroscopy cavity, the mirror fixture defining an opening adapted to receive a first mirror, the mirror fixture defining a through-hole, the mirror fixture having at least three clamps spaced to selectively secure the first mirror in the opening after the first mirror has been positioned;
a mirror holder defining an opening adapted to temporarily receive the first mirror for positioning the first mirror relative to the mirror fixture and to the body, the mirror holder defining a through-hole; and
a translation stage to move the mirror holder and the first mirror through a plurality of positions relative to the mirror fixture and to the body as laser light is projected through the through-hole of the mirror holder, through the first mirror, through the through-hole of the mirror fixture, into the resonant spectroscopy cavity, and out of the resonant spectroscopy cavity to be reflected by a second mirror secured to a second end of the body until resonance of the laser light is detected.

2. The system of claim 1, wherein each of the at least three clamps comprise an arcuate shoe movable along a respective radial axis of the mirror fixture.

3. The system of claim 1, wherein the translation stage comprises a five axis translation stage capable of moving the mirror holder along an X axis, a Y axis, a Z axis, a pitch axis, and a yaw axis.

4. The system of claim 1, wherein a portion of the mirror fixture defining the opening further defines at least three evenly spaced gaps; and
wherein a portion of the mirror holder defining the opening comprises at least three evenly spaced arms, each of the spaced arms positioned to engage a corresponding gap of the mirror fixture during mirror positioning.

5. The system of claim 4, wherein each of the evenly spaced arms defines a threaded hole along a respective radial axis of the mirror holder for receiving a respective one of at least three set screws; and
wherein the at least three set screws are selectively moveable inward to secure the first mirror and selectively moveable outward to release the first mirror.

6. The system of claim 1, further comprising two or more translation rods along which the translation stage moves relative to the body.

7. A system for mirror positioning, the system comprising:
a body defining a longitudinal resonant spectroscopy cavity;
a mirror fixture securable to a first end of the body, the mirror fixture defining an opening adapted to receive a first mirror, the mirror fixture defining a through-hole, the mirror fixture having at least three clamps spaced to selectively secure the first mirror in the opening;
a mirror holder defining an opening adapted to temporarily receive the first mirror for positioning the first mirror relative to the mirror fixture and to the body, the mirror holder defining a through-hole; and
a translation stage to move the mirror holder and the first mirror through a plurality of positions relative to the mirror fixture and to the body as laser light is projected through the through-hole of the mirror holder, through the first mirror, through the through-hole of the mirror fixture, into the resonant spectroscopy cavity, and out of the resonant spectroscopy cavity to be reflected by a second mirror secured to a second end of the body until resonance of the laser light is detected.

8. The system of claim 7, wherein each of the at least three clamps comprise an arcuate shoe movable along a respective radial axis of the mirror fixture.

9. The system of claim 7, wherein the translation stage comprises a five axis translation stage capable of moving the mirror holder along an X axis, a Y axis, a Z axis, a pitch axis, and a yaw axis.

10. The system of claim 7, wherein a portion of the mirror fixture defining the opening further defines at least three evenly spaced gaps; and
wherein a portion of the mirror holder defining the opening comprises at least three evenly spaced arms, each of the spaced arms positioned to engage a corresponding gap of the mirror fixture during mirror positioning.

11. The system of claim 10, wherein each of the evenly spaced arms defines a threaded hole along a respective radial axis of the mirror holder for receiving a respective one of at least three set screws; and
wherein the at least three set screws are selectively moveable inward to secure the first mirror and selectively moveable outward to release the first mirror.

12. The system of claim 7, further comprising two or more translation rods along which the translation stage moves relative to the body.

13. A method of mirror positioning, the method comprising:
securing a mirror fixture to a first end of a body defining a longitudinal resonant spectroscopy cavity, the mirror fixture defining an opening adapted to receive a first mirror, the mirror fixture defining a through-hole, the mirror fixture having at least three clamps spaced to selectively secure the first mirror in the opening;
temporarily securing the first mirror to a mirror holder defining an opening adapted to temporarily receive the first mirror for positioning the first mirror relative to the mirror fixture and to the body, the mirror holder defining a through-hole;
attaching the mirror holder to a five axis translation stage capable of moving the mirror holder along an X axis, a Y axis, a Z axis, a pitch axis, and a yaw axis; and
moving, via the translation stage, the mirror holder and the first mirror through a plurality of positions relative to the mirror fixture and to the body as laser light is projected through the through-hole of the mirror holder, through the first mirror, through the through-hole of the mirror fixture, into the resonant spectroscopy cavity, and out of the resonant spectroscopy cavity to be reflected by a second mirror secured to a second end of the body until resonance of the laser light is detected.

14. The method of claim 13, wherein each of the at least three clamps comprise an arcuate shoe movable along a respective radial axis of the mirror fixture.

15. The method of claim 13, wherein a portion of the mirror fixture defining the opening further defines at least three evenly spaced gaps; and
wherein a portion of the mirror holder defining the opening comprises at least three evenly spaced arms, each of the spaced arms positioned to engage a corresponding gap of the mirror fixture during mirror positioning.
